# EUROPEAN PATENT APPLICATION

(11) **EP 4 280 403 A1**
(43) Date of publication of application: **22.11.2023**
(21) Application number: 22174605.0
(22) Date of filing: 20.05.2022
(51) Int. Cl.: H02G 3/32, B60R 16/02, H02G 5/02

(54) **BUSBAR FIXING**

(71) Applicant: Aptiv Technologies Limited, St. Michael (BB)
(72) Inventor: WALKOWSKI, Jakub, 32-851 Jadowniki (PL); OLEK, Pawel, 31-421 Kraków (PL); KWIATKOWSKI, Pawel, 26-600 Radom (PL)
(74) Representative: Bardehle Pagenberg Partnerschaft mbB Patentanwälte Rechtsanwälte

(57) **Abstract**

The present invention relates to a connector system for fixing one or more conductors, such as busbar conductors, the connector system comprising: a clamping frame, configured to be fixed to a body, such as a vehicle; and an elastic insert, adapted to be arranged within the clamping frame; wherein the insert comprises a first aperture for receiving a conductor, and wherein the insert is at least partially split at the first aperture, which allows the first aperture to be opened for receiving the conductor.

## Description

### Technical field

The present invention relates to a connector system for fixing one or more conductors, such as busbar conductors. The invention further relates to an assembled connector system for fixing one or more conductors. Moreover, the invention is directed to a vehicle comprising a connector system and to a method of assembling a connector system.

### Technical background

Conductors, or conductive elements such as busbars (or generally electrical current carrying structures) are well known in the art of electrical power conduction, particularly for conducting high electrical current and/or voltages. With the increasing numbers of electric or hybrid vehicles, such as electric or hybrid cars, busbars are increasingly used in the automotive field. For example, busbars are used to provide an electrical connection between a vehicle's drive, a vehicle's battery and/or a charging unit.

During assembly of the vehicle, busbars have to be connected to further busbar portions, such as a further busbar section and/or a terminal of the vehicle's drive, battery and/or charging unit. Typically, busbars or busbar conductors have a significant length within an electric or hybrid vehicle and must at some portions be fixed to separate parts, such as parts of the electric or hybrid vehicle.

In this technical field, specific requirements arise. Among these are reliable electrical connections, even under changing environmental influences, such as temperature, moisture, dust, vibrations and shocks or interference with any foreign object that could adversely affect the connection. Those connections must not only ensure a proper electrical but also a safe mechanical connection. Further, particularly in the automotive field, assembly time and costs play an important role.

It is known to fix e.g. busbar conductors to separate parts, such as parts of an electric or hybrid vehicle using rigid fixing means such as rigid connectors.

However, these have disadvantages. For instance, external impacts such as temperature variations, moisture, dust, vibrations and shocks adversely affect fixing the e.g. busbar conductors and thereby adversely affect the electrical connection. As an example, the fixing may be broken by external impacts. In particular, the fixing means known do not provide for sufficient dissipating of vibrations. Further, the assembly of these fixing means is typically cumbersome and not easy and/or straightforward to perform.

Against this background, there is a need in the art for an improved connector system for fixing of conductors, such as busbar conductors.

Hence, an object of the present invention is to improve the deficiencies of the prior art and to address one or more of the above-mentioned shortcomings of the prior art. It is particularly an object to provide a connector system for fixing one or more conductors, to provide for an improved, reliable and flexible fixing of the one or more conductors. It is further an object to provide a connector for fixing one or more conductors for improving fixation during environmental influences, such as temperature variations, moisture, dust, vibrations and shocks that could adversely affect the fixation. It is generally an object to improve the assembly of a connector for fixing one or more conductors.

These and other objects, which become apparent from the following description, are solved by the subject-matter of the independent claims.

### Summary of the invention

An aspect of the invention relates to a connector system for fixing one or more conductors, such as busbar conductors, the connector system comprising: a clamping frame, configured to be fixed to a body, such as a vehicle; and an elastic insert, adapted to be arranged within the clamping frame; wherein the insert comprises a first aperture for receiving a conductor, and wherein the insert is at least partially split at the first aperture, which allows the first aperture to be opened for receiving the conductor.

Conductors may be electrical current carrying structures. For instance, a conductor may be an electrical power conduit or a busbar conductor or similar. A busbar may be understood as a structure comprising one or more electrical conductors. Exemplarily, the one or more electrical conductors may be in a generating or receiving station for current/power distribution.

A clamping frame may be understood as an arrangement for clamping something, e.g. for holding, fixing or attaching something. The clamping frame is configured to be fixed or attached to a body. The body may be a vehicle or a part of a vehicle. Preferably an outer side of the clamping frame may be fixed to the body.

The connector system further comprises an elastic insert. The elastic insert may for example be of rubber material. Thereby, the insert may be deformable. For instance, if a force or a pressure is applied to the insert, the insert maybe deformed. The insert may be reverted in its undeformed state if the force or the pressure is released. The insert is adapted to be arranged within the clamping frame. Preferably, the insert is arranged within the clamping frame in an assembled state of the connector system.

The insert comprises a first aperture. Preferably, the aperture is a through-hole of the insert. The insert may thereby receive a conductor, to hold or to fix the conductor within the insert.

The insert is at least partially split at the aperture. Thereby, a slit may be present in the insert. Preferably, the insert is split such that the slit extends through the thickness of the insert. The thickness of the insert may be understood as the length in the direction in which the conductor is received. As an example, the direction of the thickness of the insert may be parallel to a through-axis of the aperture. The slit may facilitate that the aperture can be opened for receiving a conductor. The slit may start at a periphery of the aperture. The periphery of the aperture may be understood as the circumferential surface of the aperture. The aperture may be opened in a wing-form, such that two opposing portions of the insert in proximity of the slit are moved apart from each other. Thereby, the aperture is opened, to easily receive a conductor, which facilitates assembly.

The connector system's arrangement facilitates the fixation and assembly of a conductor. The insert may be split, which advantageously simplifies the assembly and reduces mistakes during the assembly. Further, preferably, the insert being one integral part improves manufacturability of the insert. In addition, it may reduce the risk of losing parts during the assembly, which may pose a problem if the insert comprised multiple different parts. Thus, the connector system provides for a time- and cost-effective solution. As will be appreciated, the elastic insert provides for fixing or holding the conductor, wherein vibrations of the surroundings, such as vibrations occurring from the body of a vehicle, to which the clamping frame of the connector system may be fixed, may be eliminated. Thereby, reliably fixing the conductor may be improved. For instance, environmental impacts, such as temperature variations, moisture, dust, vibrations and shocks, which adversely affect fixing, may be reduced. The connector system's arrangement of the present invention allows to alleviate these disadvantages by way of the elastic insert arranged in the clamping frame. The clamping frame allows for a simplified assembly of the insert. Preferably, the conductor is first received within the insert by opening the aperture and afterwards the insert is arranged within the clamping frame. Advantageously the connector system may provide for fixation of conductors of different shapes and/or sizes. As appreciated, the insert may compensate for different shapes and/or sizes and provides for a tight fixing of the conductor. It is understood that the inventive connector system complies with high-voltage requirements, which may prevail in electrical vehicles.

In a preferred embodiment, in the connector system according to the preceding aspect, the insert has the shape of a cuboid, preferably a rectangular cuboid, and/or the insert is one integral part.

As mentioned, in some aspects it is preferable that the insert has the shape of a cuboid, preferably a rectangular cuboid. It may be understood that the outer shape of the insert has the shape of a cuboid. A cuboid is a geometrical shape, which has edges and/or corners. In an example, the edges may be sharp. Thereby, a tight arrangement in the clamping frame may be improved. The cuboid may have six faces, separated by edges. Preferably, the faces of the insert, having the shape of a cuboid may contact inner faces of the clamping frame, which improves fixing of the insert. Thereby, fixing of the conductor is improved.

The insert may in addition or as an alternative be one integral part. An integral part is understood as one piece. Thereby, the insert may be referred to as one part, even if the insert is split at the aperture. For example, an integral insert may not be separated in two pieces, such as two individual pieces.

In another preferred embodiment, in the connector system according to any one of the preceding aspects and/or embodiments, the insert is split from an inner surface of the first aperture to the outer surface of the insert.

The insert is split from an inner surface of the aperture to the outer surface of the insert. This may be understood as a slit throughout the insert in a direction of the thickness of the insert, wherein the slit extends to an outer surface of the insert. Thereby, the insert is split such that two portions of the integral insert may be opened to open the aperture for receiving the conductor. The insert may still be an integral part. Thereby, this embodiment may beneficially cope with difficulties in receiving and/or assembling a conductor within the insert. It is appreciated that the insert can be deformed upon a force or pressure and can be reverted into its undeformed state upon releasing the force or pressure.

In one example, the insert is split from a circumference of the aperture in a perpendicular direction to an end of the insert. Thus, the insert is split by a minimum length, which is, however, sufficient to provide for a slit to open the aperture for receiving the conductor.

Preferably, in the connector system according to any one of the preceding aspects/embodiments, the clamping frame has inner peripheral walls that are shaped substantially complementary to an outer shape of the insert to allow a firm arrangement of the insert within the clamping frame.

Inner peripheral walls may be understood as walls that surround the inner circumference of the clamping frame. The inner peripheral walls maybe directed to the inside of the clamping frame. The inner peripheral walls may be formed such that they are complementary to an outer shape of the insert. This advantageously improves a firm and/or tight arrangement of the insert when the insert is arranged in the clamping frame. The term "complementary" may be understood such that the inner peripheral walls provide for form fitting or positively locking of the insert in the frame. Exemplarily, the term "complementary" may be understood such that the inner peripheral walls are shaped in correspondence or that they are shaped in a synchronized manner with the outer shape of the insert. The inner peripheral walls may for instance represent a negative form, in which the insert is adapted to be arranged.

As an example, the inner peripheral walls of the clamping frame may have a channel-like structure at the inner circumference of the clamping frame. Beneficially, the insert may be configured to be arranged within the channel-like structure.

In another preferred embodiment, the inner peripheral walls provide a form fitting support to the insert in three spatial axes over at least partially the outer shape of the insert, when the insert is arranged within the clamping frame.

A form fitting support may be understood such that if a force or a pressure is applied to the insert, the clamping frame may provide for a resistive force or a resistive pressure to the insert. Thereby, a firm and tight arrangement within the clamping frame may be ensured and improved and the insert does not become loose. The inner peripheral walls of the clamping frame may be such that they cover a portion of the outer shape of the insert when the insert is arranged within the clamping frame. This beneficially allows to provide a support in three spatial axes. The inner peripheral walls may not cover the overall outer shape of the insert. This improves visual contact to the insert, even when the insert is arranged within the clamping frame.

Preferably, the clamping frame of the connector system comprises a u-shaped component and a closing member, configured to close the open end of the u-shaped component, preferably wherein the closing member is connected to the u-shaped component, more preferably connected via a hinge on a first end of the closing member and via a lock at a second end of the closing member, opposite to the first end.

The u-shaped component may be understood as having a bar-like portion and two stem-like portions, substantially extending from both ends of the bar-like portion. As an example, the bar-like portion may also be slightly curved or bend such that the bar-like portion is an arc-like portion. The bar-like and the two stem-like portions may be an integral part of the u-shaped component. The two stem-like portions each have one end that extends away from the bar-like portion of the u-shaped component. As an example, a first end of the closing member is arranged on the end of the first stem-like portion. Exemplarily, the second end of the closing member, substantially opposite to the first end of the closing member, is arranged on the end of the second stem-like portion of the two stem-like portions of the u-shaped component, when assembled. This beneficially allows for opening and closing the clamping frame.

A connection may, as an example, be established by a hinge on the first end of the closing member and via a lock at the second end of the closing member. The hinge and the lock allow for a simplified opening and closing of the clamping frame by a movement of the closing member. The hinge may ensure that the closing member does not fall off when the clamping frame is opened, e.g. when the closing member is opened or moved. The closing member may thereby remain connected to one end of a stem-like portion of the u-shaped component. By way of the hinge, the closing member may be moved by a rotation about the hinge, thereby opening and closing the clamping frame. As an example, this movement may be illustrated by the movement of door. The closing member may beneficially allow for repeatable opening and closing the clamping frame. Thereby, the closing member allows the insert to be easily arranged within the clamping frame.

In another preferred embodiment, the closing member of the connector system is configured to apply pressure to the insert, when the insert is arranged within the clamping frame, preferably wherein, in a closed state of the closing member, the applied pressure is at least 0.05 N/mm², preferably at least 0.1 N/mm², more preferably at least 0.4 N/mm², even more preferably at least 0.6 N/mm², further more preferably at least 1.0 N/mm², most preferably at least 1.5 N/mm², and/or wherein, in a closed state of the closing member, the applied pressure is at most 6.0 N/mm², preferably at most 5.0 N/mm², more preferably at most 4.0 N/mm², even more preferably at most 3.0 N/mm², further more preferably at most 2.0 N/mm², most preferably at most 1.5 N/mm².

As understood, the pressure applied to the insert may increase upon closing the closing member. The applied pressure may reach it maximum value when the closing member is in a closed state. For instance, if the closing member is locked with the lock.

The applied pressure should be sufficiently high to ensure a firm and tight arrangement of the insert within the clamping frame. Thereby a firm and tight fixation of the conductor in the aperture of the insert may be ensured. The applied pressure should preferably not be too high, otherwise the material of the insert and/or the clamping frame may be adversely affected. As an example, the durability of the material may suffer unduly if the applied pressure is too high.

Preferably, the connector system further comprises one or more attachment clips, preferably two attachment clips, configured to be removably attached to the clamping frame, preferably to the closing member of the clamping frame in proximity of the first and the second end of the closing member, for attaching additional elements, such as conductors or harnesses, to the clamping frame via the one or more attachment clips.

The attachment clips may be configured and shaped such that they can be attached to the clamping frame. Preferably they may be removably attached to the clamping frame, such that they could be removed and used again without destruction of the attachment clips. The attachment clips may be used to attach additional conductors, harnesses or similar to the clamping frame. This saves space and increases flexibility of the connector system.

In another preferred embodiment, the first aperture has one or more ribs protruding from an inner surface of the first aperture, the one or more ribs extending through the first aperture, preferably wherein the one or more ribs are integral with the insert.

The ribs maybe understood as protrusions. The ribs protrude from an inner surface of the aperture. Thereby, the ribs provide for a decreased contact surface between the insert and a conductor when the conductor is received in the aperture. The decreased contact surface may limit a transmission of vibrations of the environment, for instance of a body of a vehicle the connector system is mounted to. Thereby the ribs contribute to a reliable, firm and/or tight fixation of the conductor. The ribs maybe equally distributed on the inner surface of the aperture. This facilitates positioning and an equal pressure distribution. Preferably the one or more ribs are at least 5, more preferably at least 10, even more preferably at least 15, most preferably at least 20 ribs. The ribs may be shaped such that a peripheral dimension of a tip portion is smaller than a peripheral dimension of a base portion, wherein the base portion aligns with the inner surface of the aperture. This saves usage of material and reduces a contact between the conductor and the insert. The ribs may be integral with the insert, such that the insert is one piece together with the ribs.

The height of the one or more ribs should not be too large and not too small. Preferably, the height of the one or more ribs is such to achieve a balance between a reduced contact area and a firm and/or tight fixation of the conductor in the aperture.

In a further preferred embodiment, the insert is made of rubber, such as EPDM and/or NBR, preferably wherein the insert has a shore A hardness of at least 10 shore A, preferably at least 20 shore A, more preferably at least 30 shore A, even more preferably at least 40 shore A, further even more preferably at least 45 shore A, most preferably at least 50 shore A and/or wherein the insert has a shore A hardness of at most 95 shore A, preferably at most 80 shore A, more preferably at most 70 shore A, even more preferably at most 65 shore A, further even more preferably at most 60 shore A, most preferably at most 55 shore A, preferably wherein the insert has a maximum service temperature of at least 70°C, preferably at least 80°C, more preferably at least 90°C, even more preferably at least 95°C, most preferably at least 100°C.

The material of the insert should be deformable and at the same time sufficiently firm to allow an applied pressure to be transmitted to the conductor to improve a firm arrangement of the conductor in the clamping frame. The maximum service temperature (which may also be referred to as continuous use temperature) of a material may be understood as the highest temperature at which the material could be used, for prolonged periods, without significant change in properties. An increase in temperature above the maximum service temperature may cause degradation, chemical change, and/or excessive creep of the material. The specified material of the rubber may allow for improved fixing and assembling of one or more conductors whilst alleviating transmission of vibration even under severe environmental conditions such as increased temperatures.

In one example, the insert is made of Ethylene Propylene Diene Monomer rubber (EPDM). EPDM may be a type of synthetic rubber. EPDM may be made from ethylene, propylene, and a diene comonomer that may enable crosslinking via sulfur vulcanization. EPDM may have a shore A hardness ranging from 30-90. Rubbers with saturated polymer backbones, such as EPDM, may have an improved resistance to heat as compared to, for instance, unsaturated rubbers (such as natural rubber). Exemplarily, EPDM maybe substantially resistant to temperatures up to 150°C. Thereby, EPDM may have a maximum service temperature of 150°C. As another example, the insert may be made of a nitrile rubber or a Nitrile Butadiene Rubber (NBR). NBR may be a synthetic rubber derived from acrylonitrile and butadiene. EPDM may have a shore A hardness ranging from 30-90. NBR may have a stability at temperatures up to 90°C or 100°C. Exemplarily NBR may also have a maximum service temperature ranging to about 120°C. This temperature may even be increased in case olefinic groups are removed, which may be susceptible to chemical degradation. Removal of olefinic groups may be established by hydrogenation.

In another preferred embodiment, the insert comprises a second aperture for receiving a second conductor, and wherein the insert is at least partially split at the second aperture as well, which allows the second aperture to be opened for receiving the second conductor, preferably wherein the insert is split from an inner surface of the second aperture to the outer surface of the insert.

As appreciated, the insert according to this embodiment comprises a second aperture. It is understood that the same features and advantages described above with respect to the first aperture (or the aperture, if the term "first" is left out) are applicable in terms of the second aperture and the insert being split from an inner surface of the second aperture. It is appreciated that the insert is preferably still one integral piece. Thereby, even though two conductors may be received in the first and the second aperture, this arrangement has the advantage that handling of merely one integral piece, i.e. the insert, is required. This facilitates the assembly and obviates the need of a cumbersome handling of multiple individual parts of the insert.

It may also be possible to receive more than two conductors. For instance, it may be possible to provide an insert comprising a third and/or fourth aperture. As an example, it maybe possible to provide an insert comprising a multitude of apertures.

In a further preferred embodiment, the first aperture and the second aperture are arranged next to each other and have substantially the same shape, preferably wherein the first aperture and the second aperture both substantially have the shape of a circle or rectangle, when viewed along a direction of receiving the respective conductor.

The first and the second aperture are arranged next to each other. It maybe understood that the insert has a symmetrical appearance. Further, the two apertures may be arranged in a substantial central location to improve a transmission of environmental impacts, such as vibrations, to the fixation of the conductors. The first and the second aperture may have the shape of a circle or a rectangle. It may also be possible that one aperture has the shape of a circle, and the other aperture has the shape of a rectangle. The shape may refer to the overall shape of the apertures, although ribs may protrude from an inner surface of the apertures.

Another aspect of the invention relates to an assembled connector system, comprising a connector system according to any one of the preceding aspects and/or embodiments, wherein the insert is arranged within the clamping frame.

When the insert is arranged within the clamping frame, preferably one or more conductors are received in the first/second aperture. Further, the closing member of the clamping frame may be closed, such that pressure is applied to the insert to provide a reliable and firm fixing of the one or more conductors.

A further aspect of the invention is directed to a vehicle comprising a connector system according to any of the preceding aspects and/or embodiments, wherein the connector system is fixed to the vehicle via a fixing plate, wherein the fixing plate is attached to the clamping frame of the connector system via fixing means, such as a click lock, preferably wherein the fixing plate is welded or screwed to the vehicle.

The fixing plate may be of metallic material, to facilitate welding to a part of the vehicle, such as a body panel of a vehicle. The connection of the connector system to the fixing plate is preferably established by a click lock to conveniently connect the connector system to the fixing plate. Preferably the bar-like portion of the u-shaped component of the clamping frame is connected to the fixing plate via a click lock.

Another aspect of the invention relates to a method of assembling a connector system in accordance with any one of the preceding aspects and/or embodiments, the method comprising the steps of: a) opening at least partially the first aperture of the insert; b) arranging a conductor in the first aperture; c) opening the closing member of the frame; d) arranging the insert within the clamping frame; e) closing the closing member of the frame.

As understood, the same features and advantages as described above with respect to the connector system are also applicable to the method of assembling a connector system.

### Brief description of the figures

In the following, the accompanying figures are briefly described:
Fig. 1 illustrates multiple connector systems for fixing conductors according to the invention;
Fig. 2 illustrates a variant of the connector systems shown in Fig. 1;
Fig. 3 shows a detail of a connector system of Fig. 1;
Fig. 4 shows a detail of a variant of a connector system of Fig. 2;
Fig. 5 shows the connector of Fig. 3, wherein the connector system is assembled without conductors;
Fig. 6 shows the connector of Fig. 4, wherein the connector system is assembled without conductors;
Fig. 7 shows the clamping frame of the connector systems shown in Figs. 1 to 6;
Fig. 8 illustrates the two inserts of the connector systems of Figs 1 to 6;
Fig. 9 illustrates a connector system having the clamping frame of Fig. 7 with additional components;
Fig. 10 illustrates a flow chart of a method of assembling a connector system according to an embodiment of the invention.

### Detailed description of the figures

In the following, the invention is described with reference to the accompanying figures in more detail. However, the present invention may not be limited to the following examples.

While specific feature combinations are described in the following with respect to the exemplary embodiments of the present invention, it is to be understood that not all features of the discussed embodiments have to be present for realizing the invention, which is defined by the subject matter of the claims. The disclosed embodiments may be modified by combining certain features of one embodiment with one or more features of another embodiment. Specifically, the skilled person will understand that features, components and/or functional elements of one embodiment can be combined with technically compatible features, components and/or functional elements of any other embodiment of the present invention given that the resulting combination falls within the definition of the invention provided by the claims.

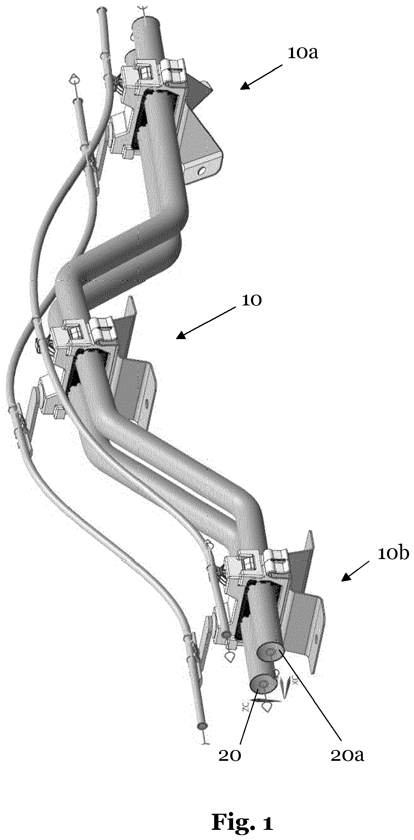

Fig. 1 illustrates three connector systems 10, 10a, 10b for fixing two conductors 20, 20a, having a rounded or circular outer shape. Each of the connector systems 10, 10a, 10b receives two conductors 20, 20a at different portions thereof. The conductors 20, 20a have a substantial circular cross-section.

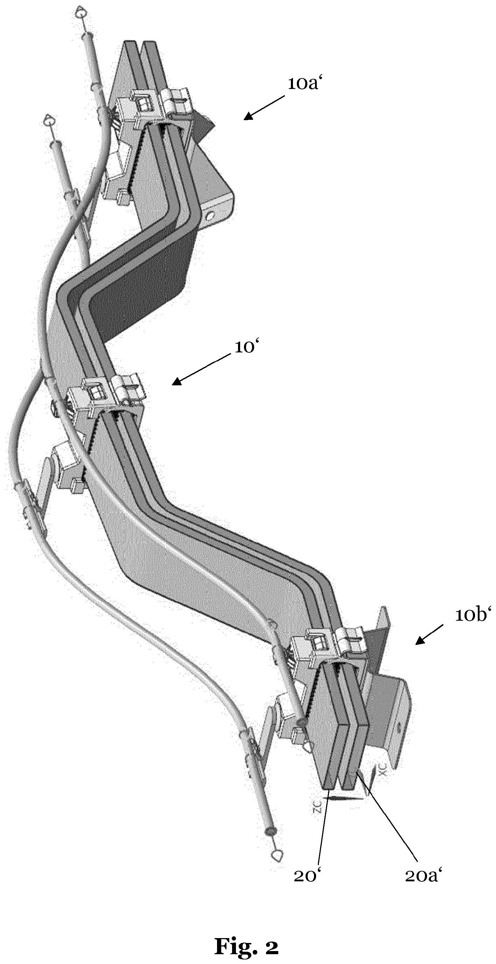

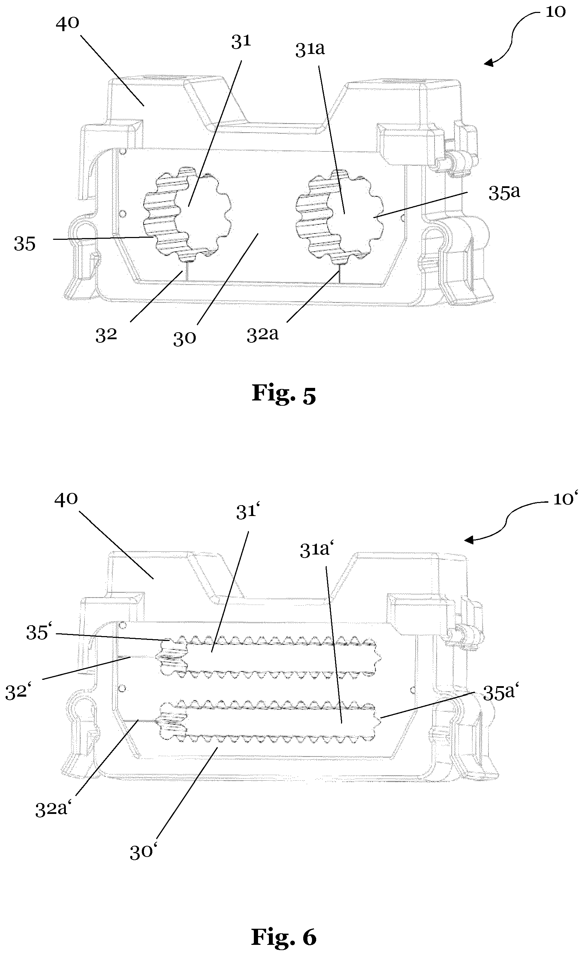

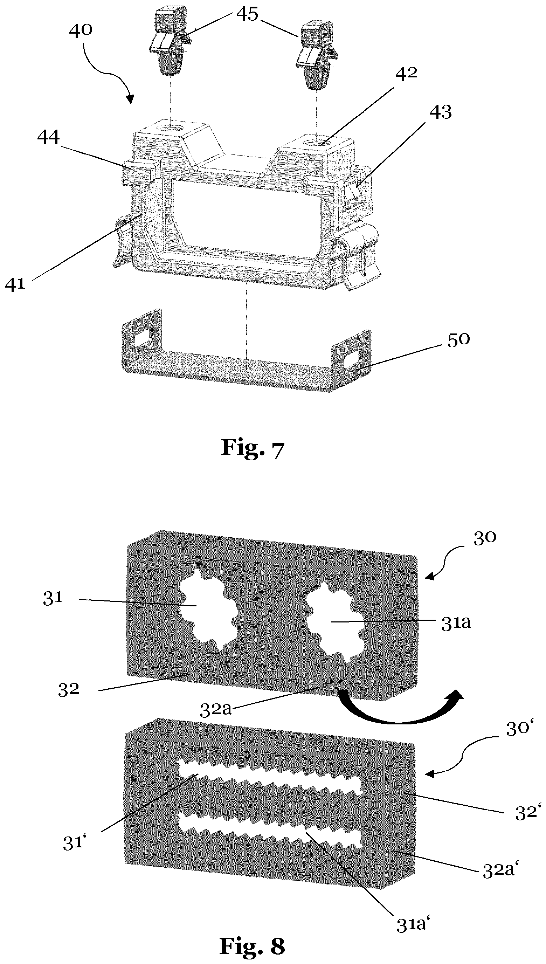

Fig. 2 illustrates three connector systems 10', 10a', 10b' for fixing two rectangular conductors 20', 20a'. Apart from the cross-sectional shape of the conductors, and the respecify formed inserts, which are shown in Figs. 6 and 8, the connectors are identical to the ones shown in Fig. 1.

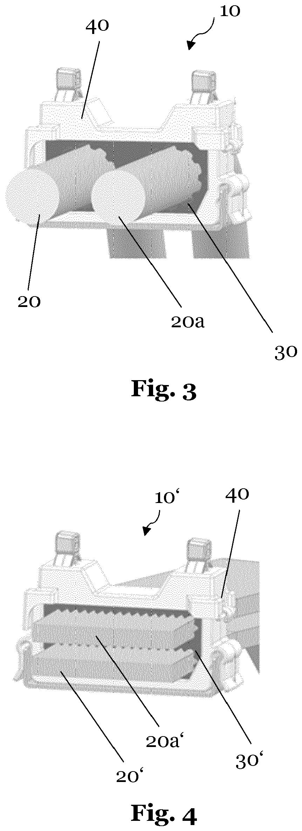

Fig. 3 shows the connector system 10 in more detail. The connector system 10 is illustrated in an assembled state. Thus, the conductors 20, 20a are received within the apertures of an insert 30 and the insert 30 is arranged within a clamping frame 40. The connector system 10 comprises the clamping frame 40 and the elastic insert 30, arranged within the clamping frame 40. The insert 30 is of rubber material, such as EPDM or NBR.

Fig. 4 shows the connector system 10' in more detail. Like with the connector system of Fig. 3, the connector system 10' is illustrated in an assembled state. Thus, the conductors 20', 20a' are received within the apertures of the insert 30' and the insert 30' is arranged within the clamping frame 40. It will be appreciated that the frame 40 of connector system 10' is identical to the frame 40 of connector system 10. Only the respective inserts 30, 30' are different to accommodate the different conductors 20, 20' and 20a, 20a'. However, also the insert 30' is of rubber material, such as EPDM or NBR.

Fig. 5 illustrates connector system 10 in assembled condition, but without any conductors. One can see the elastic insert 30 being arranged within the clamping frame 40. The insert comprises a first aperture 31 and a second aperture 31a. The apertures 31, 31a have substantially the shape of a circle and are through-holes. The insert 30 is split at the first aperture 31 by a slit 32 and the second aperture 31a is split by a slit 32a.

Thereby, as shown, the insert is split from an inner surface of the apertures to the outer surface of the insert. The slits allow to bend open the inserts at the slits to allow easy access to the apertures.

The insert 30 has the shape of a cuboid, more specific a rectangular cuboid. Furthermore, the insert 30 is one integral part. The clamping frame 40 has inner peripheral walls that are shaped substantially complementary to the outer shape of the insert 30 to allow a firm arrangement of the insert 30 within the clamping frame 40. The inner peripheral walls have a channel-like structure and the insert 30 is arranged within the channel-like structure. The clamping frame 40 may thus provide a form-fitting support to the insert 30 in three spatial axes.

Furthermore, the apertures 31, 31a have a number of ribs 35, 35a protruding from an inner surface of the apertures 31, 31a. The ribs extend through the aperture 31 in a direction of a thickness of the insert 30 and are integral with the insert 30. Thus, a contact area of the insert 30 to a conductor may be reduced when the conductor is received in the aperture 31.

Fig. 6 illustrates connector system 10' without conductors. This embodiment is similar to the embodiment described in Fig. 5 and it is therefore refrained from giving a detailed explanation. The main difference is the cross-sectional shape of the apertures 31', 31a', which is rectangular and not round, to accommodate rectangular conductors.

Fig. 7 illustrates a clamping frame 40. The clamping frame 40 comprises a u-shaped component 41 and a closing member 42, configured to close the open end of the u-shaped component 41. The closing member 42 may be connected to the u-shaped component 41 via a hinge 43 on a first end of the closing member 42 and via a lock 44 at a second end of the closing member 42, opposite to the first end. It is appreciated that upon closing the closing member 42, a pressure may be applied to an insert, when it is arranged within the clamping frame 40. This beneficially improves fixing of the insert and of the conductors when they are received in the apertures of the insert.

Further, the frame 40 is provided with two attachment clips 45, configured to be removably attached to the clamping frame 40. Preferably, the attachment clips 45 are attached to the closing member 42 of the clamping frame 40 in proximity of the first and the second end of the closing member 42. Thereby, additional elements, such as conductors 20 or harnesses, may be attached to the clamping frame 40 via the two attachment clips 45.

Fig. 7 further illustrates a fixing plate 50. The frame 40, and thus the connector system, may be fixed to a body, such as a body of a vehicle via the fixing plate 50. The fixing plate 50 may be attached to the clamping frame 40 of the connector system 10 via fixing means, such as a click lock. The fixing plate 50 may be welded or screwed to a body, such as a body of a vehicle. A vehicle may be an automobile or a car.

Fig. 8 illustrates the inserts 30, 30' in unassembled condition. Both are integral elements having a cuboid shape. It will be appreciated that due to e.g. slit 32a it is possible to open the aperture 31a as indicated by the arrow. Due to the elasticity of insert 30 the right-hand portion (as seen in the orientation of Fig. 8) of insert 30 can be bend outwardly, thereby increasing the gap formed by slit 32a until a conductor can be easily arranged in aperture 31a. After the conductor is mounted, the right-hand portion snapes back to its initial position, as shown in Fig. 8. A corresponding functionality is provided by the other slits 32, 32' and 32a'.

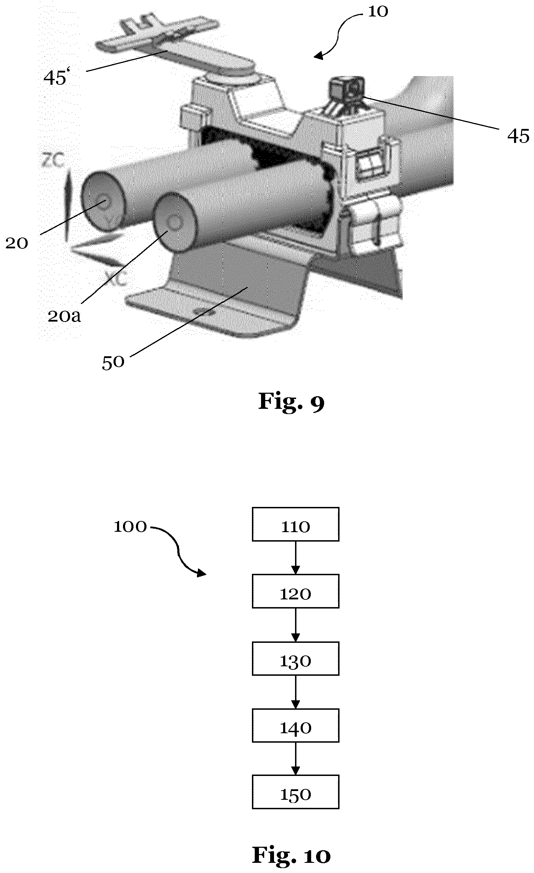

Fig. 9 illustrates the connector system 10 having two attachment clips 45, 45' attached to the clamping frame. The attachment clip 45' is different than attachment clip 45. As appreciated, different attachment clips 45, 45' may be applied according to the invention to allow for different functionalities. This may improve usage of a small amount of space whilst enabling a large functionality. For instance, different conductors or harnesses may be attached to the clamping frame 40 by way of the selection of attachment clips 45, 45'.

Fig. 10 illustrates a flow chart of a method 100 of assembling a connector system according to an embodiment of the invention. The method 100 comprises the steps of:
a) opening 110 at least partially the first aperture;
b) arranging 120 a conductor 20 in the first aperture 31;
c) opening 130 the closing member 42 of the frame;
d) arranging 140 the insert 30 within the clamping frame 40;
e) closing 150 the closing member 42 of the clamping frame.

As appreciated, the method 100 may also comprise arranging a second conductor in a second aperture of the insert.

### List of reference signs

- 10, 10', 10a, 10a', 10b, 10b': connector system
- 20, 20', 20a, 20a', 20b, 20b': conductor
- 30, 30': elastic insert
- 31, 31': first aperture
- 31a, 31a': second aperture
- 32, 32': first slit
- 32a, 32a': second slit
- 35, 35', 35a', 35b': ribs
- 40: clamping frame
- 41: u-shaped component
- 42: closing member
- 43: hinge
- 44: lock
- 45: attachment clips
- 50: fixing plate
- 100: method
- 110: method step: opening
- 120: method step: arranging
- 130: method step: opening
- 140: method step: arranging
- 150: method step: closing

## Claims

1. A connector system (10; 10') for fixing one or more conductors (20), such as busbar conductors, the connector system (10) comprising:
a clamping frame (40), configured to be fixed to a body, such as a vehicle; and
an elastic insert (30; 30'), adapted to be arranged within the clamping frame (40);
wherein the insert (30; 30') comprises a first aperture (31; 31') for receiving a conductor (20; 20'), and
wherein the insert (30; 30') is at least partially split at the first aperture (31; 31'), which allows the first aperture (31; 31') to be opened for receiving the conductor (20; 20').

2. The connector system (10; 10') according to the preceding claim, wherein the insert (30; 30') has the shape of a cuboid, preferably a rectangular cuboid, and/or wherein the insert (30; 30') is one integral part.

3. The connector system (10; 10') according to any one of the preceding claims, wherein the insert (30; 30') is split from an inner surface of the first aperture (31; 31') to the outer surface of the insert (30; 30').

4. The connector system (10; 10') according to any one of the preceding claims, wherein the clamping frame (40) has inner peripheral walls that are shaped substantially complementary to an outer shape of the insert (30; 30') to allow a firm arrangement of the insert (30; 30') within the clamping frame (40).

5. The connector system (10; 10') according to the preceding claim, wherein the inner peripheral walls provide a form fitting support to the insert (30; 30') in three spatial axes over at least partially the outer shape of the insert (30; 30'), when the insert (30; 30') is arranged within the clamping frame (40).

6. The connector system (10; 10') according to any one of the preceding claims, wherein the clamping frame (40) comprises a u-shaped component (41) and a closing member (42), configured to close the open end of the u-shaped component (41), preferably wherein the closing member (42) is connected to the u-shaped component (41), more preferably connected via a hinge (43) on a first end of the closing member (42) and via a lock (44) at a second end of the closing member (42), opposite to the first end.

7. The connector system (10; 10') according to the preceding claim, wherein the closing member (42) is configured to apply pressure to the insert (30; 30'), when the insert (30; 30') is arranged within the clamping frame (40),
preferably wherein, in a closed state of the closing member (42), the applied pressure is at least 0.05 N/mm², preferably at least 0.1 N/mm², more preferably at least 0.4 N/mm², even more preferably at least 0.6 N/mm², further more preferably at least 1.0 N/mm², most preferably at least 1.5 N/mm², and/or wherein, in a closed state of the closing member (42), the applied pressure is at most 6.0 N/mm², preferably at most 5.0 N/mm², more preferably at most 4.0 N/mm², even more preferably at most 3.0 N/mm², further more preferably at most 2.0 N/mm², most preferably at most 1.5 N/mm².

8. The connector system (10; 10') according to claims 6 or 7, wherein the connector system (10; 10') further comprises one or more attachment clips (45; 45'), preferably two attachment clips (45; 45'), configured to be removably attached to the clamping frame (40), preferably to the closing member (42) of the clamping frame (40) in proximity of the first and the second end of the closing member (42), for attaching additional elements, such as conductors or harnesses, to the clamping frame (40) via the one or more attachment clips (45).

9. The connector system (10; 10') according to any one of the preceding claims, wherein the first aperture (31; 31') has one or more ribs (25; 35') protruding from an inner surface of the first aperture (31; 31'), the one or more ribs extending through the first aperture (31; 31'), preferably wherein the one or more ribs are integral with the insert (30; 30').

10. The connector system (10; 10') according to any one of the preceding claims, wherein the insert (30; 30') is made of rubber, such as EPDM or NBR,
preferably wherein the insert (30; 30') has a shore A hardness of at least 10 shore A, preferably at least 20 shore A, more preferably at least 30 shore A, even more preferably at least 40 shore A, further even more preferably at least 45 shore A, most preferably at least 50 shore A and/or wherein the insert (30; 30') has a shore A hardness of at most 95 shore A, preferably at most 80 shore A, more preferably at most 70 shore A, even more preferably at most 65 shore A, further even more preferably at most 60 shore A, most preferably at most 55 shore A,
preferably wherein the insert (30; 30') has a maximum service temperature of at least 70°C, preferably at least 80°C, more preferably at least 90°C, even more preferably at least 95°C, most preferably at least 100°C.

11. The connector system (10; 10') according to any one of the preceding claims, wherein the insert (30; 30') comprises a second aperture (31a; 31a') for receiving a second conductor (20a; 20a'), and wherein the insert (30; 30') is at least partially split at the second aperture (31a; 31a'), which allows the second aperture (31a; 31a') to be opened for receiving the second conductor (20a; 20a'), preferably wherein the insert (30; 30') is split from an inner surface of the second aperture (31a; 31a') to the outer surface of the insert (30; 30').

12. The connector system (10; 10') according to the preceding claim, wherein the first aperture (31; 31') and the second aperture (31a; 31a') are arranged next to each other and have substantially the same shape, preferably wherein the first aperture (31; 31') and the second aperture (31a; 31a') both substantially have the shape of a circle or rectangle, when viewed along a direction of receiving the conductor (20; 20') and the second conductor (20a; 20a').

13. An assembled connector system (10; 10'), comprising a connector system (10) according to any one of claims 1 to 12, wherein the insert (30; 30') is arranged within the clamping frame (40).

14. A vehicle comprising a connector system (10; 10') according to any of the preceding claims, wherein the connector system (10; 10') is fixed to the vehicle via a fixing plate, wherein the fixing plate is attached to the clamping frame (40) of the connector system (10; 10') via fixing means, such as a click lock, preferably wherein the fixing plate is welded or screwed to the vehicle.

15. A method (100) of assembling a connector system (10; 10') in accordance with any one of claims 1-13, the method (100) comprising the steps of:
a) opening (110) at least partially the first aperture (31; 31') of the insert (30; 30');
b) arranging (120) a conductor (20; 20') in the first aperture (31; 31');
c) opening (130) the closing member (42) of the frame;
d) arranging (140) the insert (30; 30') within the clamping frame (40);
e) closing (150) the closing member (42) of the clamping frame (40).
